# FASCICULE DE BREVET EUROPEEN

(11) **EP 3 401 164 B1**
(45) Date de publication et mention de la délivrance du brevet: **11.03.2020**
(21) Numéro de dépôt: 18166598.5
(22) Date de dépôt: 10.04.2018
(51) Int. Cl.: B60Q 3/78, B60Q 3/54, B60Q 3/64

(54) **ÉLÉMENT DE GARNITURE INTÉRIEURE DE VÉHICULE AUTOMOBILE COMPORTANT UN AGENCEMENT D'UN SYSTÈME D'ÉCLAIRAGE D'AMBIANCE**
INNENVERKLEIDUNGSTEIL EINES FAHRZEUGS MIT EINER ANORDNUNG EINES RAUMBELEUCHTUNGSSYSTEMS
VEHICLE INTERIOR TRIM ELEMENT COMPRÌSING AN ARRANGEMENT OF AN AMBIENT LIGHTING SYSTEM

(30) Priorité: 09.05.2017 FR 1754022
(43) Date de publication de la demande: 14.11.2018
(73) Titulaire: PSA Automobiles SA, 78300 Poissy (FR)
(72) Inventeur: VIDEIRA, Filipe, 78140 VELIZY VILLACOUBLAY (FR); NORAIS, Marc, 78500 SARTROUVILLE (FR)

(56) Documents cités:
- EP-A1- 2 772 393
- EP-A1- 3 246 622
- WO-A1-2014/186589
- WO-A1-2016/035502
- DE-A1-102011 119 534
- DE-A1-102014 113 355
- FR-A1- 2 930 625
- FR-A1- 2 995 971
- JP-A- 2003 297 108
- JP-A- 2010 070 126
- US-A1- 2016 347 244

## Description

La présente invention concerne un élément de garniture intérieure de véhicule automobile comportant un système d'éclairage d'ambiance, comme connu du document US 2016/0347244 A1.

L'habitacle d'un véhicule automobile comporte un ensemble de moyens d'éclairage intérieur qui permettent pour certains, de réaliser des fonctions d'éclairage utiles et pour d'autres, de réaliser des fonctions d'éclairage dites d'ambiance, donnant au conducteur et aux autres passagers du véhicule une impression de confort et d'apaisement.

L'éclairage d'ambiance améliore la perception de confort du conducteur et des passagers, et participe à l'esthétique et à l'attrait du véhicule au moment de la décision d'achat.

Pour cela, le véhicule est pourvu de systèmes d'éclairage d'ambiance, diffusant une lumière de faible intensité, colorée ou non, souvent réglable, disposés à différents endroits et sur différentes surfaces des garnitures présentes dans l'habitacle au niveau des portes, de la planche de bord, du pavillon, ... L'éclairage d'ambiance est conventionnellement dit doux, tamisé ou diffus.

Cet éclairage doit être apaisant et le choix des coloris et des matériaux est important pour le rendu visuel. On utilise souvent des matériaux dit opalescents en référence à la couleur de l'opale se rapprochant d'un blanc laiteux.

L'opalescence est la propriété optique d'un matériau transparent ou translucide qui lui donne un aspect ou une teinte laiteuse, rappelant ceux de l'opale.

Un éclairage d'ambiance est généralement obtenu au moyen d'une source de lumière, par exemple une LED, d'un guide de lumière (par exemple un tronçon de fibre optique), et d'un écran en matériau opalin appelé également diffuseur.

Dans certains systèmes d'éclairage d'ambiance de type bande lumineuse, souvent utilisée pour souligner (ou surligner) notamment une ligne de planche de bord, les rails de guidage d'un occulteur de pavillon comme décrit dans le document EP2454110A1, les rayons lumineux provenant d'une source de lumière placée à une extrémité du guide de lumière sont acheminés vers l'autre extrémité du guide de lumière.

Le conducteur peut souvent choisir la couleur et l'intensité de l'éclairage d'ambiance.

L'éclairage d'ambiance s'enclenche par exemple dès que l'éclairage extérieur du véhicule est allumé, ou en fonction de la mesure effectuée par un capteur de luminosité, ou bien encore lors de l'ouverture d'un des ouvrants du véhicule (porte, volet de coffre).

La disposition d'une seule source de lumière à une extrémité du guide de lumière est problématique pour plusieurs raisons, dont notamment la perte du flux lumineux le long du guide. Cette perte de flux lumineux, fonction de la longueur du guide de lumière, est surtout remarquable du côté opposé à la source.

En outre, la disposition de la source de lumière à une extrémité du guide de lumière est, dans certaines situations, difficile à mettre en œuvre, faute d'espace disponible pour recevoir une telle source.

Par ailleurs, la disposition de la source de lumière en une extrémité du guide de lumière rend difficile la réalisation, au moyen de ce guide, d'une ligne fermée de lumière.

La demande de brevet FR1654470, déposée par la demanderesse, enseigne, en référence à la figure 1, un système d'éclairage d'ambiance 1 pour un véhicule automobile, non représenté, permettant de souligner une partie de garniture à l'intérieur de l'habitacle du véhicule.

Le système d'éclairage 1 comprend un guide de lumière principal longiligne 2, et deux segments de guide de lumière 3 et 4 formant avec le guide principal 2 en ensemble monobloc. On dit que les segments de guide 3 et 4 viennent de matière avec le guide principal 2.

Chaque segment de guide de lumière 3 et 4 définit une branche d'entrée de lumière sur le guide principal 2 ayant chacune un profil en forme d'arc (portion de cercle). Les deux branches 3 et 4 définissent, avec le guide principal 2, deux tronçons d'une boucle 5 circulaire, ouverte dans l'axe de symétrie AA de la boucle 5.

Le guide principal 2 et les deux branches 3 et 4 sont de forme générale cylindrique à section au moins partiellement circulaire.

Deux sources lumineuses 6 et 7 (des LEDS) sont placées, respectivement, en regard des deux extrémités libres de chaque branche 3 et 4, selon une direction perpendiculaire à la surface d'entrée des deux branches 3 et 4 pour un guidage totalement réfléchissant de la lumière générée par les deux sources lumineuses 6 et 7 à l'intérieur des branches 3 et 4 puis vers l'intérieur du guide principal 2 selon des directions opposées.

Le profil en forme d'arc des branches 3 et 4 permet de pouvoir guider la lumière de chaque côté opposé du guide principal 2 d'abord par réflexion totale à l'intérieur des branches 3 et 4, puis progressivement à l'intérieur du guide principal 2 parallèlement au raccordement « mécanique » progressif des branches 3 et 4 sur le guide principal 2, sensiblement au centre du guide principal 2. Les deux branches 3 et 4 se raccordent entre elles et sur le guide principal 2 dans une zone dit de raccordement ZR sensiblement à mi- longueur du guide principal 2. Par ailleurs, le guide principal 2 comporte une pluralité d'irrégularités définissant des prismes optiques 8 aménagés sur sa face arrière (face opposée à la face de sortie de lumière ou face avant du guide 2) permettant de renvoyer les rayons lumineux reçus des branches 3 et 4 dans des directions qui sont sensiblement perpendiculaires F à la direction principale FP de propagation de la lumière dans le guide principal 2 suivant sa longueur.

Les extrémités des branches 3 et 4, se raccordant au guide principal 2, sont, par construction, tangentes à la face arrière du guide principal 2.

L'inconvénient d'un tel système d'éclairage 1 vient de la construction du raccordement des deux branches 3 et 4 dans la zone de raccordement ZR du guide principal.

En effet, dans la zone de raccordement ZR, aux intersections I des branches 3 et 4 avec le guide principale 2, la régularité de la forme cylindrique de section circulaire des extrémités des branches 3 et 4 n'est plus assurée, et les rayons lumineux qui avant raccordement étaient entièrement guidés à l'intérieur des branches 3 et 4, sortent partiellement à l'extérieur des extrémités des branches 3 et 4 sans se propager dans le guide principal 2. Cette partie de rayons lumineux FL n'est plus contrôlée et génère des fuites de lumière à l'origine de défauts d'aspect visuels.

Un autre problème, toujours dans la zone de raccordement, ZR est que dans cette zone, il n'y a plus de prisme 8 sur la face arrière du guide principal 2. Il en résulte une accumulation non contrôlée de lumière dans le guide principal 2 dans la zone de raccordement ZR qui génère un défaut d'aspect, visuellement inesthétique, désigné par « point chaud » sur la face visible (face avant) du guide principal 2, ce qui va à l'encontre de l'homogénéité recherchée pour un éclairage d'ambiance et impacte la qualité perçue.

Ce « point chaud » est d'autant plus amplifié dès lors qu'un écran diffuseur de lumière est placé devant le guide de lumière.

Un objectif de la présente invention est de permettre l'intégration d'un système d'éclairage d'ambiance 1 tel que décrit ci-dessus, dans un élément de garniture d'un habitable de véhicule automobile, avec un minimum d'encombrement et offrant par ailleurs un éclairage homogène, sans « point chaud », sur toute la longueur du guide principal.

A cet effet, l'invention a pour premier objet un élément de garniture intérieure de véhicule automobile comportant un agencement d'un système d'éclairage d'ambiance, dans lequel, un guide de lumière principal du système d'éclairage, de forme longiligne, est disposé entre des première et seconde parties de l'élément de garniture, dans lequel un écran diffusant la lumière du guide de lumière principal vers l'extérieur de l'élément de garniture, de forme longiligne, comportant une partie saillante s'étendant parallèlement au guide principal, est disposé sur le guide de lumière principal, et dans lequel un masque est rapporté sur le système d'éclairage et l'écran, entre les première et seconde parties de l'élément de garniture, en laissant apparaitre la partie saillante de l'écran entre le masque et l'une des deux parties d'élément de garniture, et dans lequel un moyen d'occultation opaque à la lumière est aménagé localement sur ou dans l'écran pour occulter des fuites de lumière générées par le guide de lumière principal sans pour autant occulter la lumière diffusée par la partie saillante de l'écran. Selon l'invention, le système d'éclairage comporte des premier et second segments de guide de lumière définissant respectivement des première et seconde branches d'entrée de lumière se rejoignant entre elles dans une même zone de raccordement sur la face arrière du guide principal ; le moyen d'occultation étant localisé en regard de la face avant du guide principal dans la zone de raccordement.

Selon une caractéristique, le guide principal et l'écran sont supportés par un même support entre les première et seconde parties de la garniture, et dans lequel le moyen d'occultation est un muret solidaire dudit support.

Selon une autre caractéristique, ledit muret est logé dans une échancrure, ménagée dans l'écran en dehors de la partie saillante de l'écran, et dont les dimensions sont complémentaires de celles du muret.

Selon une autre caractéristique, le système d'éclairage comprend en outre des première et seconde sources de lumière couplées respectivement aux extrémités libres des première et seconde branches d'entrée de lumière, générant respectivement des premier et second rayons de lumière ; lesdites première et seconde branches guidant les premier et second rayons de lumière vers l'intérieur du guide principal selon des directions opposées.

Selon une autre caractéristique, la face arrière du guide de lumière principal comprend une pluralité d'irrégularités de surface, agencées sur sa longueur pour projeter les rayons de lumière reçus des première et deuxième branches sur la face avant du guide.

Selon une autre caractéristique, les première et seconde branches ont une forme d'arc définissant ensemble une boucle ouverte.

Selon une autre caractéristique, le guide de lumière principal et les première et seconde branches sont des segments de guides de lumière cylindriques à section au moins partiellement circulaire.

Selon une autre caractéristique, l'élément de garniture intérieure est une planche de bord.

L'invention a pour second objet, un véhicule comprenant un agencement tel que décrit ci-dessus.

D'autres caractéristiques et avantages de l'invention apparaîtront plus clairement et de manière détaillée à la lecture de la description ci-après d'un mode de réalisation, faite de manière non limitative, en référence aux dessins annexés dans lesquels :
- la figure 1, déjà décrite, illustre un système d'éclairage d'ambiance de l'état de la technique mettant en évidence les fuites de lumière ;
- la figure 2 illustre un exemple d'agencement du système d'éclairage d'ambiance dans une planche de bord de véhicule automobile ;
- la figure 3 illustre une vue de détail, en perspective, de l'agencement du système d'éclairage de la figure 1, hors planche de bord pour mettre en évidence le muret d'occultation selon l'invention ;
- les figures 4 et 5 illustrent respectivement des vues en coupe transversales de l'agencement du système d'éclairage dans la planche de bord, pris selon une première section transversale IV-IV suivant le plan médian passant par l'axe de symétrie de la boucle du système d'éclairage et une deuxième section transversale V-V située en dehors de la zone de raccordement.

Les figures sont schématiques et ne respectent pas nécessairement l'échelle, pour en faciliter la lecture.

Elles sont repérées dans l'espace par un référentiel commun tridimensionnel X-Y-Z habituellement utilisé pour représenter un véhicule automobile dans l'espace.

Les éléments communs, représentés sur les différentes figures, sont désignés par les mêmes références.

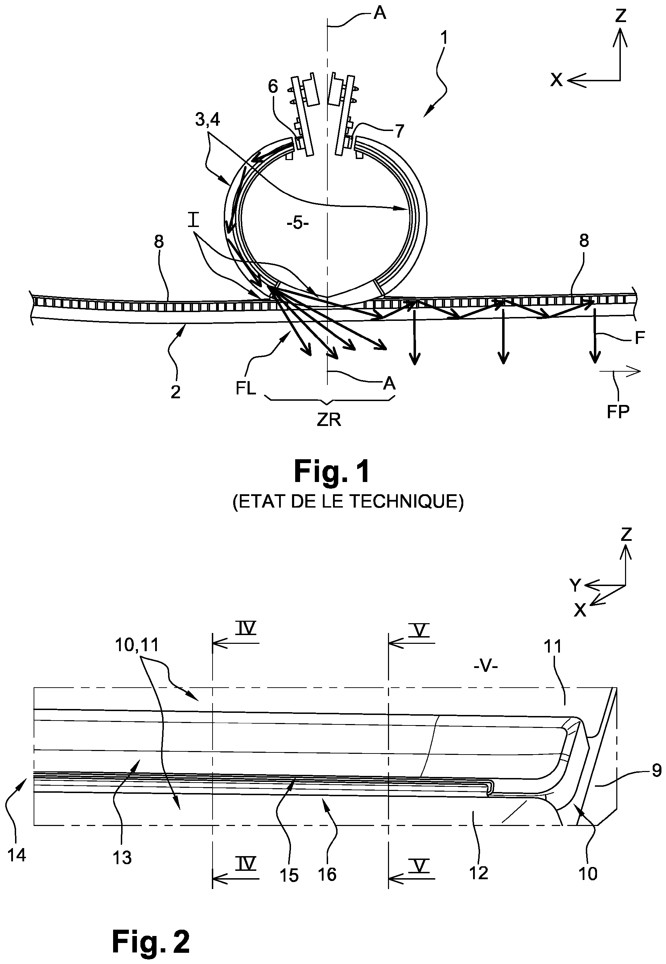

Un exemple d'agencement du système d'éclairage d'ambiance 1 dans une planche de bord 9 de véhicule automobile V est illustré en référence à la figure 2.

Sur la figure 2, le système d'éclairage 1 n'est pas visible. Il est implanté dans une cavité 10 ménagée entre des parties supérieure 11 et inférieure 12 de la planche de bord 9.

Des axes de coupes transversales IV-IV et V-V sont représentés respectivement pour correspondre au centre de la zone de raccordement ZR et en dehors de ladite zone de raccordement ZR.

Le système d'éclairage 1 est logé en retrait par rapport aux faces externes des partie supérieure 11 et inférieure 12 de la planche de bord 9 (faisant face aux passagers avant).

La cavité 10 est partiellement occultée par un masque 13. Cette cavité 10, de longueur déterminée, s'étend parallèlement le long de la grande dimension de la planche de bord 9 et le masque 13 est conformé pour s'adapter aux profils des deux parties 11 et 12 de planche de bord 9.

Le masque 13 comporte un évidement inférieur, définissant avec la partie inférieure 12 de la planche de bord 9, une fenêtre 14, laissant apparaître une partie saillante 15 d'un écran 16, ou diffuseur de lumière, diffusant la lumière générée par le système d'éclairage 1.

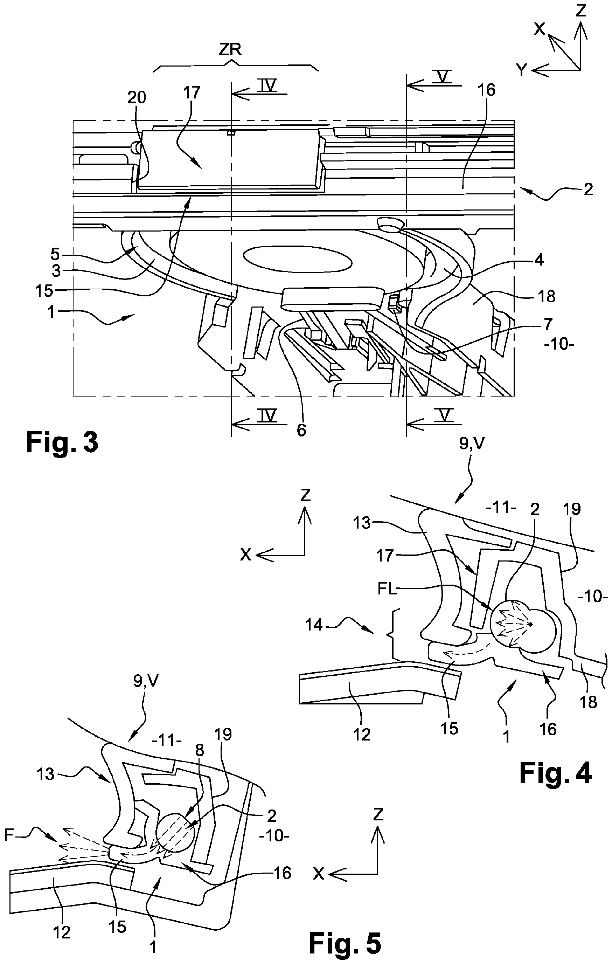

La figure 3 illustre une vue de détail, en perspective, de l'agencement du système d'éclairage 1 de la figure 1, hors planche de bord 9, pour mettre en évidence un moyen d'occultation, ou muret d'occultation 17, opaque à la lumière, selon l'invention.

Les axes des coupes transversales IV-IV et V-V de la figure 2 sont représentés de manière indicative sur la figure 3, pour permettre de visualiser la position du système d'éclairage 1 dans l'agencement selon l'invention.

Les figures 4 et 5 illustrent respectivement des vues en coupe transversales de l'agencement selon l'invention, suivant les axes de coupe IV-IV et V-V de la figure 2

Le muret 17 vient de matière avec une partie 18 formant support du système d'éclairage 1. Le support 18 du système d'éclairage 1 est lui-même fixé dans le fond de la cavité 10.

Le support 18 est conformé pour entourer et maintenir la boucle ouverte 5 formée par les deux branches 3 et 4 ainsi que les plaques de circuits imprimés sur lesquelles sont montées les LEDs 6 et 7. La face arrière 19 du support 18 maintient également le guide principal 2.

Le positionnement précis du muret 17, en regard de la zone de raccordement ZR, sa forme et ses dimensions sont déterminés pour occulter totalement les fuites de lumière FL.

Le muret 17 est contenu dans une échancrure 20 aménagée dans le corps de l'écran 16. Le muret 17, dans l'exemple considéré a une forme générale rectangulaire dont la grande dimension s'étend parallèlement au guide principal 2. L'échancrure 18 de l'écran 16, encadrant au plus près le muret 17, comporte également un profil complémentaire de forme générale rectangulaire.

L'échancrure 18 s'arrête, dans sa partie inférieure, sur la partie saillante 15 de l'écran 16.

Les rayons F et seulement eux, sont diffusés à l'extérieur du guide principal 2 par la partie saillante 15 de l'écran diffuseur 16.

L'écran diffuseur 16 est rapporté sur le guide principal 2 et il est fixé sur le support 18 emprisonnant le guide 2 sur le support 18.

La partie supérieure du masque 13, lorsqu'il est monté dans la cavité 10, vient en appui sur la face avant supérieure du support 18 et la partie inférieure du masque 13 vient en appui sur la partie saillante 15 de l'écran 16.

Le muret 17 permet d'autre part, d'occulter certains rayons de lumière qui en s'échappant du guide principal 2 pourraient par réflexion contre la face interne du masque 13, potentiellement réfléchissante, confiner plus de lumière dans la zone de raccordement ZR et créer un « point chaud».

A titre de variante, le moyen d'occultation 17 qui a été présenté jusque-là par un muret solidaire du support 18, venant de matière ou pas avec le support 18, peut être réalisé par un ruban collé directement sur l'écran ou par sérigraphie ou être directement issu d'une pigmentation locale de l'écran au moment du procédé d'injection de matière dans le moule.

Toutefois, la solution telle que décrite (muret) est celle qui est la plus intéressante d'un point de vue économique.

Avantageusement, la disposition des (ou de la) source(s) de lumière à mi longueur du guide de lumière 2 rend possible l'obtention d'une ligne de lumière continue et homogène sur toute la longueur du guide 2. Cette disposition permet d'obtenir une photométrie sensiblement homogène et uniforme le long du guide de lumière.

Le système d'éclairage d'ambiance qui vient d'être décrit présente de nombreux autres avantages. Il peut être implémenté avec un minimum d'encombrement et permet d'augmenter la longueur effective ou utile du guide de lumière

## Revendications

1. Elément de garniture intérieure (9) de véhicule automobile (V) comportant un agencement d'un système d'éclairage d'ambiance (1), dans lequel, un guide (2) de lumière principal du système d'éclairage (1), de forme longiligne, est disposé entre des première et seconde parties (11, 12) de l'élément de garniture (9), dans lequel un écran (16) diffusant la lumière du guide (2) de lumière principal vers l'extérieur de l'élément de garniture (9), de forme longiligne, comportant une partie saillante (15) s'étendant parallèlement au guide principal (2), est disposé sur le guide (2) de lumière principal, et dans lequel un masque (13) est rapporté sur le système d'éclairage (1) et l'écran (16), entre les première et seconde parties (11, 12) de l'élément de garniture (9), en laissant apparaitre la partie saillante (15) de l'écran (16) entre le masque (13) et l'une des deux parties d'élément de garniture (11, 12), et dans lequel un moyen d'occultation (17) opaque à la lumière est aménagé localement sur ou dans l'écran (16) pour occulter des fuites de lumière générées par le guide de lumière principal (2) sans pour autant occulter la lumière diffusée par la partie saillante (15) de l'écran (16), **caractérisé en ce que** le système d'éclairage (1) comporte des premier et second segments de guide de lumière définissant respectivement des première et seconde branches (3, 4) d'entrée de lumière se rejoignant entre elles dans une même zone de raccordement (ZR) sur la face du guide principal (2), orientée vers l'intérieur de la garniture ; le moyen d'occultation (17) étant localisé en regard de la face avant du guide (2) principal, orientée vers l'extérieur de la garniture, dans la zone de raccordement (ZR)

2. Elément de garniture selon la revendication précédente, dans lequel le guide principal (2) et l'écran (16) sont supportés par un même support (18) entre les première et seconde parties (11, 12) de la garniture (9), et dans lequel le moyen d'occultation (17) est un muret solidaire dudit support (18).

3. Elément de garniture selon la revendication précédente, dans lequel ledit muret (17) est logé dans une échancrure (20), ménagée dans l'écran (16) en dehors de la partie saillante (15) de l'écran (16), et dont les dimensions sont complémentaires de celles du muret (17).

4. Elément de garniture selon la revendication précédente, dans lequel le système d'éclairage (1) comprend en outre des première et seconde sources de lumière (6, 7) couplées respectivement aux extrémités libres des première et seconde branches (3, 4) d'entrée de lumière, générant respectivement des premier et second rayons de lumière, lesdites première et seconde branches (3, 4) guidant les premier et second rayons de lumière vers l'intérieur du guide principal (2) selon des directions opposées.

5. Elément de garniture selon l'une des revendications 1 à 4, dans lequel la face arrière du guide de lumière principal (2) comprend une pluralité d'irrégularités de surface (8), agencées sur sa longueur pour projeter les rayons de lumière reçus des première et deuxième branches (3, 4) sur la face avant du guide (2).

6. Elément de garniture selon l'une des revendications 1 à 5, dans lequel les première et seconde branches (3, 4) ont une forme d'arc définissant ensemble une boucle ouverte (5).

7. Elément de garniture selon l'une des revendications 1 à 6, dans lequel le guide de lumière principal (2) et les première et seconde branches (3, 4) sont des segments de guides de lumière cylindriques à section au moins partiellement circulaire.

8. Elément de garniture selon l'une des revendications 1 à 7, dans lequel l'élément de garniture intérieure est une planche de bord (9)

9. Véhicule comprenant un élément de garniture selon l'une quelconque des revendications 1 à 8.

## Patentansprüche

1. Innenverkleidungsteil (9) eines Kraftfahrzeugs (V), das eine Anordnung eines Raumbeleuchtungssystems (1) umfasst, wobei ein Hauptlichtleiter (2) des Beleuchtungssystems (1) mit länglicher Form zwischen einem ersten und einem zweiten Teil (11, 12) des Verkleidungsteils (9) angeordnet ist, wobei ein Schirm (16) das Licht des Hauptlichtleiters (2) zu der Außenseite des Verkleidungsteils (9) mit geradliniger Form diffundiert, der einen vorragenden Teil (15) umfasst, der sich parallel zu dem Hauptleiter (2) erstreckt, der auf dem Hauptlichtleiter (2) angeordnet ist, und wobei eine Maske (13) auf dem Beleuchtungssystem (1) und dem Schirm (16) zwischen dem ersten und dem zweiten Teil (11, 12) des Verkleidungselements (9) angebaut ist, wobei der vorragende Teil (15) des Schirms (16) zwischen der Maske (13) und einem der zwei Verkleidungsteile (11, 12) sichtbar gelassen wird, und wobei ein Licht undurchlässiges Verdunkelungsmittel (17) lokal auf oder in dem Schirm (16) eingerichtet ist, um Lichtlecks zu verdunkeln, die von dem Hauptlichtleiter (2) erzeugt werden, ohne jedoch das Licht zu verdunkeln, das von dem vorragenden Teil (15) des Schirms (16) diffundiert wird, **dadurch gekennzeichnet, dass** das Beleuchtungssystem (1) ein erstes und ein zweites Lichtleitersegment umfasst, die jeweils einen ersten und einen zweiten Lichteingangszweig (3, 4) definieren, die sich in einer selben Anschlusszone (ZR) auf der Fläche des Hauptleiters (2), die zu dem Inneren der Verkleidung gerichtet ist, vereinen; wobei das Verdunkelungsmittel (17) gegenüber der Vorderfläche des Hauptleiters (2), zu dem Äußeren der Verkleidung gerichtet, in der Anschlusszone (ZR) liegt.

2. Verkleidungselement nach dem vorstehenden Anspruch, wobei der Hauptleiter (2) und der Schirm (16) von einem selben Träger (18) zwischen dem ersten und dem zweiten Teil (11, 12) der Verkleidung (9) getragen werden, und wobei das Verdunkelungsmittel (17) ein Raumteiler ist, der fest mit dem Träger (18) verbunden ist.

3. Verkleidungselement nach dem vorstehenden Anspruch, wobei der Raumteiler (17) in einer Aussparung (20) aufgenommen ist, die in dem Schirm (16) außerhalb des vorragenden Teils (15) des Schirms (16) angelegt ist, und dessen Maße zu denen des Raumteilers (17) komplementär sind.

4. Verkleidungselement nach dem vorstehenden Anspruch, wobei das Beleuchtungssystem (1) außerdem eine erste und eine zweite Lichtquelle (6, 7) umfasst, die jeweils an den freien Enden des ersten und des zweiten Lichteingangszweigs (3, 4) gekoppelt sind, die jeweils einen ersten und einen zweiten Lichtstrahl erzeugen, wobei der erste und der zweite Zweig (3, 4) den ersten und den zweiten Lichtstrahl zu dem Inneren des Hauptleiters (2) entlang entgegengesetzter Richtungen leiten.

5. Verkleidungselement nach einem der Ansprüche 1 bis 4, wobei die Rückseite des Hauptlichtwellenleiters (2) eine Vielzahl von Oberflächenunregelmäßigkeiten (8) umfasst, die auf seiner Länge eingerichtet sind, um die Lichtstrahlen, die von dem ersten und dem zweiten Zweig (3, 4) empfangen werden, auf die Vorderfläche des Leiters (2) zu projizieren.

6. Verkleidungselement nach einem der Ansprüche 1 bis 5, wobei der erste und der zweite Zweig (3, 4) eine Bogenform aufweisen, die gemeinsam eine offene Schleife (5) bilden.

7. Verkleidungselement nach einem der Ansprüche 1 bis 6, wobei der Hauptlichtwellenleiter (2) und der erste und der zweite Zweig (3, 4) Segmente zylindrischer Lichtwellenleiter mit mindestens teilweise kreisförmigem Querschnitt sind.

8. Verkleidungselement nach einem der Ansprüche 1 bis 7, wobei das Innenverkleidungselement ein Armaturenbrett (9) ist.

9. Fahrzeug, das ein Verkleidungselement nach einem der Ansprüche 1 bis 8 umfasst.

## Claims

1. An interior trim element (9) of a motor vehicle (V) comprising an arrangement of an ambient lighting system (1), in which a main light guide (2) of the lighting system (1), of an elongated shape, is disposed between first and second parts (11, 12) of the trim element (9), in which a screen (16) diffusing the light of the main light guide (2) towards the exterior of the trim element (9), of elongated shape, comprising a projecting part (15) extending parallel to the main guide (2), is disposed on the main light guide (2), and in which a mask (13) is added on the lighting system (1) and the screen (16), between the first and second parts (11, 12) of the trim element (9), leaving the projecting part (15) of the screen (16) to appear between the mask (13) and one of the two trim element parts (11, 12), and in which a concealment means (17) which is opaque to the light is arranged locally on or in the screen (16) to conceal leaks of light generated by the main light guide (2) without, however, concealing the light diffused by the projecting part (15) of the screen (16), **characterized in that** the lighting system (1) comprises first and second segments of light guide defining respectively first and second branches (3, 4) for inlet of light, meeting each other in the same connection zone (ZR) on the face of the main guide (2), oriented towards the interior of the trim; the concealment means (17) being located opposite the front face of the main guide (2), oriented towards the exterior of the trim, in the connection zone (ZR).

2. The trim element according to the preceding claim, in which the main guide (2) and the screen (16) are supported by the same support (18) between the first and second parts (11, 12) of the trim (9), and in which the concealment means (17) is a wall integral with said support (18).

3. The trim element according to the preceding claim, in which said wall (17) is housed in an indentation (20), arranged in the screen (16) outside the projecting part (15) of the screen (16), and the dimensions of which are complementary to those of the wall (17).

4. The trim element according to the preceding claim, in which the lighting system (1) further includes first and second light sources (6, 7) coupled respectively to the free ends of the first and second branches (3, 4) for inlet of light, generating respectively first and second rays of light, said first and second branches (3, 4) guiding the first and second rays of light towards the interior of the main guide (2) along opposite directions.

5. The trim element according to one of Claims 1 to 4, in which the rear face of the main light guide (2) includes a plurality of surface irregularities (8), arranged over its length for projecting the received rays of light of the first and second branches (3, 4) on the front face of the guide (2).

6. The trim element according to one of Claims 1 to 5, in which the first and second branches (3, 4) have an arc shape defining together an open loop (5).

7. The trim element according to one of Claims 1 to 6, in which the main light guide (2) and the first and second branches (3, 4) are segments of light guides which are cylindrical with at least partially circular section.

8. The trim element according to one of Claims 1 to 7, in which the interior trim element is a dashboard (9).

9. A vehicle including a trim element according to any one of Claims 1 to 8.
